Europäisches Patentamt

European Patent Office

Office européen des brevets

(19)

(11) **EP 1 450 514 A1**

(12) **EUROPEAN PATENT APPLICATION**

(43) Date of publication:
**25.08.2004 Bulletin 2004/35**

(51) Int Cl.⁷: **H04L 12/56**, H04L 29/06,
H04L 1/00

(21) Application number: **03003162.9**

(22) Date of filing: **18.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **MATSUSHITA ELECTRIC INDUSTRIAL
CO., LTD.
Kadoma-shi, Osaka 571-8501 (JP)**

(72) Inventors:
• **Rey, Jose Luis
  64287 Darmstadt (DE)**

• **Hakenberg, Rolf
  64295 Darmstadt (DE)**
• **Zink, Michael
  64295 Darmstadt (DE)**

(74) Representative: **Grünecker, Kinkeldey,
Stockmair & Schwanhäusser Anwaltssozietät
Maximilianstrasse 58
80538 München (DE)**

(54) **Server-based rate control in a multimedia streaming environment**

(57)     The present invention relates to a method for controlling the transmission data rate of a multimedia data stream in a session-based streaming environment comprising a media server (31) and a destination terminal (36), wherein a session control protocol is employed to control the multimedia data stream. Further, the present invention relates to the media server performing the method and the destination terminal adapted for communication with the media server. Finally, a media streaming system comprising at least one media server and at least one destination terminal is provided. To provide a rate control in a media streaming environment in a transparent way to the destination terminals receiving a multimedia data stream from a media server, the present invention provides an implementation of a server-based variant of the TFRC rate control algorithm by shifting all processing to the server.

Fig. 3

**Description**

The present invention relates to a method for controlling the transmission data rate of a multimedia data stream in a session-based streaming environment comprising a media server and a destination terminal, wherein a session control protocol is employed to control the multimedia data stream. Further, the present invention relates to the media server performing the method and the destination terminal adapted for communication with the media server. Finally, a media streaming system comprising at least one media server and at least one destination terminal is provided.

TCP Friendly Rate Control (TFRC), as defined by the Internet Engineering Task Force (IETF) in "TCP Friendly Rate Control (TFRC): Protocol Specification", RFC 3448, is a congestion control mechanism designed for unicast data flows operating in an Internet environment and competing with TCP traffic. Instead of specifying a complete protocol, TFRC simply specifies a congestion control mechanism that could be used in a transport protocol in an application incorporating end-to-end congestion control at the application level, or in the context of endpoint congestion management. TFRC does not discuss packet formats or reliability.

TFRC is designed to be reasonably fair when competing for bandwidth with TCP data flows, where a data flow is "reasonably fair" if its transmission data rate is generally within a factor of two of the transmission data rate of a TCP data flow under the same conditions. However, TFRC has a much lower variation of throughput over time compared with TCP, which makes it more suitable for applications such as telephony or streaming media where a relatively smooth transmission data rate is of importance.

TFRC is a receiver-based mechanism, with the calculation of the congestion control information (i.e., the loss event rate) in the data receiver rather in the data sender. This is well-suited to an application where the sender is a large server handling many concurrent connections, and the receiver has more memory and CPU cycles available for computation. In addition, a receiver-based mechanism is more suitable as a building block for multicast congestion control.

For its congestion control mechanism, TFRC directly uses a throughput equation for the allowed transmission data rate as a function of the loss event rate and round-trip time. In order to compete fairly with TCP, TFRC uses the TCP throughput equation, which roughly describes TCP's transmission data rate as a function of the loss event rate, round-trip time, and packet size.

A loss event is defined as one or more lost or marked packets from a window of data, where a marked packet refers to a congestion indication from Explicit Congestion Notification (ECN) (see Ramakrishnan et al., "The Addition of Explicit Congestion Notification (ECN) to IP", RFC 3168, IETF).

Generally speaking, TFRC's congestion control mechanism works as follows: The receiver measures the loss event rate and feeds this information back to the sender. Next, the sender also uses these feedback messages to measure the round-trip time ($t_{RTT}$). The loss event rate $p$ and $t_{RTT}$ are then fed into TFRC's throughput equation, giving the acceptable transmit rate. Finally, the sender adjusts its transmit rate to match the calculated rate.

Any realistic equation giving TCP throughput as a function of loss event rate and $t_{RTT}$ may be suitable for use in TFRC. However, the TCP throughput equation used must reflect TCP's retransmit timeout behaviour, as this dominates TCP throughput at higher loss rates. The assumptions implicit in the throughput equation about the loss event rate parameter have to be a reasonable match to how the loss rate or loss event rate is actually measured. While this match is not perfect for the throughput equation and loss rate measurement mechanisms given below, in practice the assumptions turn out to be close enough. The throughput equation is:

$$X_{calc} = \frac{s}{t_{RTT} \cdot \sqrt{\frac{2 \cdot b \cdot p}{3}} + t_{RTO} \cdot 3\sqrt{\frac{3 \cdot b \cdot p}{8} \cdot p \cdot \left(1 + 32 \cdot p^2\right)}}$$

In this equation, $X_{calc}$ is the transmission data rate in bytes/second, $s$ denotes the packet size in bytes. $t_{RTT}$ is the round-trip time in seconds and $p$ is the loss event rate, between 0 and 1.0, of the number of loss events as a fraction of the number of packets transmitted. Obtaining an accurate and stable measurement of the loss event rate $p$ is of primary importance for TFRC. Loss rate measurement is performed at the receiver, based on the detection of lost or marked packets from the sequence numbers of arriving packets.

b is the number of packets acknowledged by a single TCP acknowledgement. This number may be set to 1 as most TCP implementations do not use delayed acknowledgements, which would yield a value of 2 for $b$. $t_{RTO}$ represents the TCP retransmission timeout (RTO) value in seconds. The expression can be further simplified by setting $t_{RTO} = 4 \cdot t_{RTT}$. A more accurate calculation of $t_{RTO}$ is possible, but experiments with the current setting have resulted in reasonable fairness with existing TCP implementations. Another possibility would be to set $t_{RTO} = max(4 \cdot t_{RTT}, one\ second)$, to match the recommended minimum of one second on the retransmission time out.

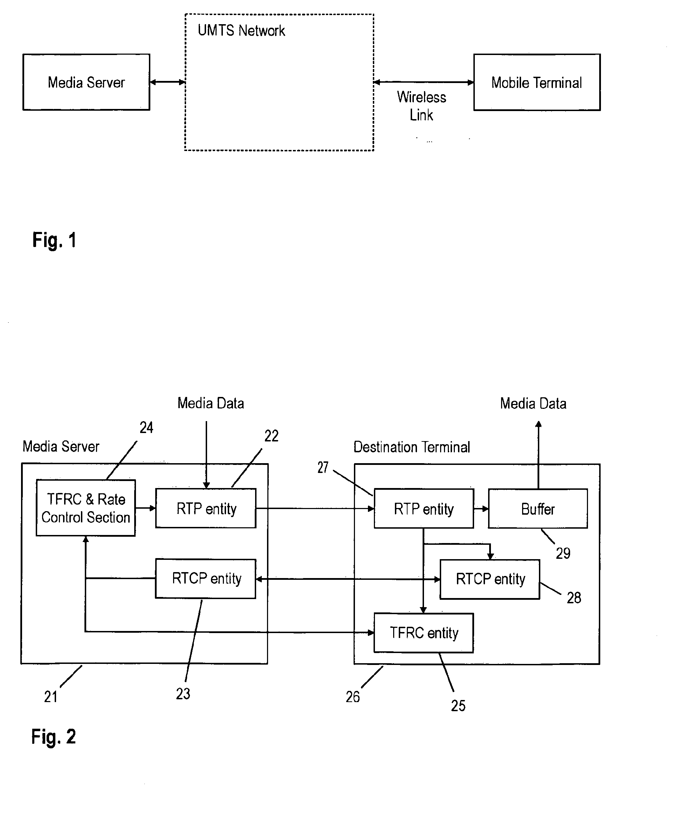

Fig. 1 depicts a conventional usage scenario for streaming applications: a media server is located in an network, e.g. the UMTS Network, and it provides a streaming service to a, for example, UMTS client (Mobile Terminal), that requests it. In the TFRC rate control mechanism, the data packets sent from the media server to the destination terminal or client, comprise information as the estimated roundtrip-time $t_{RTT}$ by the server, a sequence number $SN_i$ to identify the order of the transmitted data packets and a timestamp $ts_i$ indicating the time at which a packet was sent.

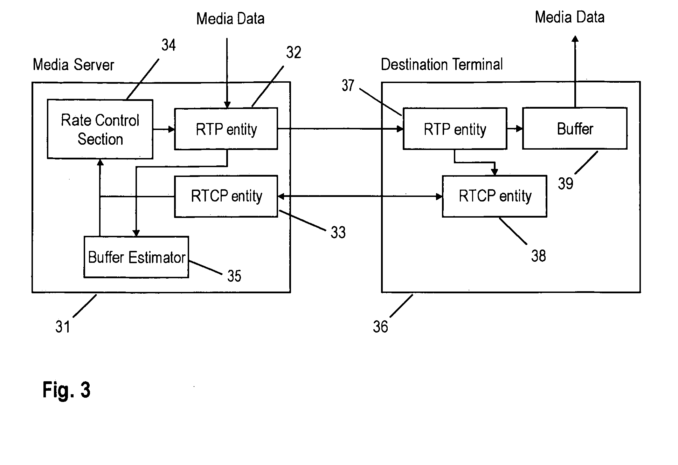

Fig. 2 illustrates the entities of a media server 21 and a destination terminal 26 in an illustrative implementation of TFRC. Media server 21 comprises a TFRC & Rate Control Section 24, an RTP entity 22 and the corresponding RTCP entity 23, which are both illustrated to demonstrate the data flow between the communication end-points. The destination terminal 26 comprises the counterparts to these entities, RTP entity 27 and RTCP entity 28. Further, the destination terminal includes a buffer 29, for storing the received data packets.

Feedback packets are formed in the TFRC entity 25 at the destination terminal 26 including parameters as the measured and calculated loss event rate p, the destination terminal's estimated receiving data rate $X_{recv}$, the processing delay at the server $t_{delay}$ and the timestamp $t_{recvdata}$ of the last data packet received from the media server.

At the media server 21, the values of the parameters contained in the feedback packets are "plugged" into the throughput equation in TFRC & Rate Control Section 24 and the result represents the new sending data rate used by the media server 21. To prevent the data rate from becoming too high, another parameter not present in this formula but that is used every time a new transmission data rate is determined. This parameter is the destination terminal's estimated receiving data rate $X_{recv}$ mentioned before. Finally, the media server 21 adjusts its transmit rate to match the calculated rate in the RTP entity 24.

TFRC was developed to control the bit-rate of a server providing a streaming service, e.g. video streaming, over unreliable transport protocols like RTP in a way that it is fair to other TCP connections sharing the same link and it does not produce abrupt rate and delay variations that would severely degrade the quality of the received stream media.

However, TFRC uniquely specifies an implementation that requires both, server and client, to carry out some processing tasks and exchange the results of these by means of non-standard and, to the date, non-existing messages.

Further in streaming scenarios having thin clients, i.e. clients with limited computational power, limited memory capacity as well as limited power supply, it is not desirable that the clients spend additional resources for implementing a rate control scheme as suggested by TFRC. Additionally, the signalling overhead implicated by TFRC is not desirable, for example, when implementing TFRC in a streaming environment with low-bit-rate lossy links, such as wireless links.

It is therefore the object of the present invention to provide a rate control in a media streaming environment, in a transparent way to the destination terminals receiving a multimedia data stream from a media server.

The object is solved by the invention as claimed in the independent claims. Preferred embodiments are subject matter to their dependent claims.

Advantageously, all necessary processing and the determination of the parameters used to calculate the transmission data rate using the above defined throughput equation are gathered or determined by the media server, which relieves the processing load of the client, i.e. makes rate control transparent to the destination terminal. Hence, it is no longer necessary that the destination terminal calculates and communicates parameters as the round-trip time $t_{RTT}$ and the loss event rate $p$ to the media server and, further, there need to be no extensions made to the standard multimedia streaming protocols used for data delivery and the session control protocol used for controlling data delivery, as in the present invention existing protocol messages are employed by the media server to derive the necessary parameters for the calculation of the transmission data rate.

In an embodiment the present invention provides a method for controlling the transmission data rate of a multimedia data stream in a session-based streaming environment comprising a media server and a destination terminal, wherein a session control protocol is employed to control the multimedia data stream. The method is performed at the media server and comprises the steps of transmitting the multimedia data stream from the media server to the destination terminal according to a multimedia streaming protocol, receiving session control data from the destination terminal, calculating a data rate value of the multimedia data stream based on the session control data, and controlling the data rate of the multimedia data stream based on the calculated data rate value.

To be able to advantageously determine the necessary parameters to calculate the data rate value, the session control data may comprise time stamps and/or packet loss report blocks for reporting losses of data packets which are employed to transmit the multimedia data stream.

To calculate the data rate value, the media server may calculate a loss event rate and a round-trip time between the media server and the destination terminal based on the received time stamps and the packet loss report blocks first. Based on the loss event rate and the round-trip time the media server may then calculate the data rate value.

It is of further advantage if the media server uses the size of the data packets used to transmit the multimedia data stream for the calculation of the data rate value.

Before transmitting the multimedia data stream to the destination terminal, the media server may initialise a session. To initialise the session, the media server transmits report interval information to the destination terminal, wherein the time interval between transmissions of session control data from the destination terminal to the media server is determined based on the report interval information.

In a further embodiment of the present invention the session control data is comprised in receiver reports sent from the destination terminal to the media server according to the RTP/RTCP specifications and extended reports sent from the destination terminal to the media server for reporting a packet loss rate. The report interval information may comprise report ratio information determining the ratio of the number of said receiver reports and the number of said extended reports.

The multimedia data stream and the session control data may be transmitted in data packets, wherein the data packets comprise a sequence number and further comprising the step of storing a transmission time and the sequence number of the data packets transmitted to the destination terminal in a memory.

Further, an embodiment of the present invention allows to estimate the fill-status of a buffer at the destination terminal, wherein the buffer is used for buffering the received multimedia data stream. This enables the media server to increase the data rate of the multimedia data stream, in case the estimated fill-status indicates a possible buffer under-run, or to decrease the data rate of the multimedia data stream, in case the estimated fill-status indicates a possible buffer-overflow.

Advantageously, the multimedia streaming protocol may be the Real-time Transport Protocol (RTP) and the session control protocol may be the RTP Control Protocol (RTCP). Using these protocols, the session control data used for calculating the data rate value may be comprised in at least one of receiver reports, loss report blocks, receiver timestamp report blocks, and delay since last receiver report blocks. In this embodiment of the present invention, the session control data may correspond to the RTCP data messages transmitted according to the RTCP specification.

In a further embodiment the present invention provides a media server for controlling the transmission data rate of a multimedia data stream in a session-based streaming environment comprising the media server and a destination terminal, wherein a session control protocol is employed to control the multimedia data stream. The media server comprises transmission means for transmitting the multimedia data stream from the media server to the destination terminal using a multimedia streaming protocol, receiving means for receiving session control data from the destination terminal, calculation means for calculating a data rate value of the multimedia data stream based on the session control data, and control means for controlling the data rate of the multimedia data stream based on the calculated data rate value. The media server is adapted to perform the rate control method described above.

A further embodiment of the present invention provides a destination terminal adapted to perform communications with a media server according to the present invention. The destination terminal may further comprise receiving means for receiving a report interval information from the media server, wherein the time interval between transmissions of session control data and/or the ratio of transmissions of session control data may be determined based on the report interval information and transmission means for transmitting session control data to the media server based on the report interval.

The destination terminal may further comprise a buffer for buffering the received multimedia data stream.

The present invention may be advantageously used in a media streaming system comprising at least one media server and at least one destination terminal.

In the following the present invention is described in more detail in reference to the attached figures and drawings showing preferred embodiments of the invention. Similar or corresponding details in the figures are marked with the same reference numerals.

**Figure 1**    shows a sample conventional usage scenario for a streaming environment,

**Figure 2**    shows an illustrative implementation of the conventional TFRC in a media server and a destination terminal, and

**Figure 3**    shows an embodiment of a usage scenario for a streaming environment according to the present invention.

In the TFRC specification a default implementation is described that requires both server and client to exchange information to find out the values of the necessary parameters for the deviation of the transmission data rate of the multimedia stream delivered by the media server. The present invention discloses a fully server-based TFRC rate control for streaming applications.

The embodiments of the present invention will be described according to the RTP/RTCP protocol using feedback extensions as suggested in the IETF Internet Draft "RTCP Feedback Extensions", by T. Friedman et al., November 2002. However, the present invention is not limited to these embodiments.

In an embodiment the present invention employs a multimedia streaming protocol for the transmission of the multimedia data stream between the media server and destination terminal. In general the multimedia streaming protocol may provide end-to-end network transport functions suitable for applications transmitting real-time data, such as audio, video or simulation data.

The multimedia streaming protocol may be augmented by a session control protocol exchanging session control data to control the multimedia data stream between media server and destination terminal. The session control protocol may allow to monitor data delivery in a manner scalable to large multicast networks, and to provide minimal control and identification functionality. The multimedia streaming protocol and the session control protocol may be designed to be independent of the underlying transport and network layers and may support the usage of translators and mixers.

Typically, streaming sessions are set up, for example, using the Real Time Streaming Protocol (RTSP) before the multimedia data stream is transmitted. This protocol defines a series of primitives that are used to announce, describe, set up, start, stop and tear-down streaming sessions. Together with RTSP the Session Description Protocol (SDP) may be used. Later defines a language for the description of the media being streamed.

A session can be defined as a series of interactions between two communication end points that occur during the span of a single connection. Typically, one end point requests a connection with another specified end point and if that end point replies agreeing to the connection, the end points take turns exchanging commands and data. The session begins when the connection is established at both ends and terminates when the connection is ended.

Turning now to the figures, Fig. 3 shows an embodiment of a usage scenario for a streaming environment according to the present invention. A media server 31 is connected to a destination terminal 36 through a network, e. g. an UMTS network as depicted in Fig. 1. In more detail, the media server 31 comprises an RTP entity 32 and the corresponding RTCP entity 33, which are used to illustrate the data flow between media server 31 and destination terminal 36. A rate control section 34 is also included in the media server 31 as well as a buffer estimator 35. The rate control section 34 in the media server 31 instructs the RTP entity 32 to use a calculated transmission data rate for the transmission of the multimedia data stream delivered to the destination terminal 36. The rate control section 34 is connected to the RTCP entity 33 and the buffer estimator 35 to obtain the necessary information for the calculation of the transmission data rate. The destination terminal 36 comprises an RTP entity 37 and the corresponding RTCP entity 38 as the endpoints for the data flow. Further, the destination terminal 36 may comprise a buffer 39 for temporarily storing the received RTP packets to be able to reorder same, in case they received out of order, and for providing same to a higher layer application or decompressor.

Media server 31 transmits RTP encapsulated media packets encoded, for example, using MPEG4, AMR, etc. Payload format definitions for the different types of media formats exist. For example RFC 3016 (see "RTP Payload Format for MPEG-4 Audio/Visual Streams", Y. Kikuchi et al., IETF, November 2000) describes how to encapsulate MPEG4 audio and video in RTP packets.

In the following the operation of the media server 31 is described in more detail. The media server 31 stores the timestamp value $ts_i$ which indicates the time at which the packet $i$ is transmitted by the media server 31, together with the sequence number $SN_i$ of the packet $i$ in, for example, a list or hash table. The timestamp $ts_i$ is thereby different and not to be confused with the timestamp in the RTP packet itself. The stored information are used by the rate control section 34 of the media server 31 to determine the packet loss rate $p$ and to estimate the roundtrip-time $t_{RTT}$ of RTP data packets.

It is important to recognize that in contrast to the protocol definition of TFRC, according to one embodiment of the present invention the calculation of $p$ is done at the media server 31 and not at the receiver (destination terminal 36). The media server 31 may therefore keep a loss history and map the losses to loss events. This can be accomplished by mapping the losses that are reported by the destination terminal 36 to the correct time interval, employing the stored transmission time $ts_i$ of each packet $i$ together with the packet's sequence number $SN_i$ and calculating the loss event rate $p$ as specified in TFRC. While this is the preferred approach to calculate the loss event rate $p$, it is also noted that other approaches for determining the loss event rate $p$ exist.

Packet losses may be reported by the destination terminal 36 by using the RTCP entity 38. The extensions to the RTCP feedback as defined by Friedman et al. allow to specify the RTP packets that have been lost during transmission. For example the Loss RLE Report Block permits detailed reporting upon individual packet receipt and loss events. Since a Boolean trace of lost and received RTP packets is potentially lengthy, this block type permits the trace to be compressed through run length encoding.

Each block reports on a single source, identified by its synchronization source identifier (SSRC). The destination terminal 36 that is supplying the report is identified in the header of the RTCP packet. The beginning and ending RTP packet sequence numbers for the trace are specified in the block, the ending sequence number being the last sequence number in the trace plus one.

Hence, the media server 31 can determine the sequence numbers of packets lost during transmission. By employing the stored information mapping the sequence numbers $SN_i$ to a certain point in time, the transmission time, using the stored timestamp $ts_i$, the media server 31 can determine the loss intervals $l_i$ as used by the TFRC specification.

Having determined the loss intervals $I_i$ the loss event rate $p$ can be calculated in the rate control section 34 of the media server 31 in accordance with the definitions and equations given by Handley et al. in RFC 3448.

Further, RTCP sender reports (SR) together with the receiver reports (RR) transmitted by the RTCP entity 38 of the destination terminal 36 may be used to estimate the roundtrip-time $t_{RTT}$ for the calculation of the calculated transmission data rate $X_{calc}$. The difference between the last two reports received can be used to estimate the recent quality of the distribution of the multimedia data stream. The NTP timestamp is included in the receiver and sender reports so that data rates may be calculated from these differences over the interval between two reports. Moreover the timestamps in sender reports and receiver reports can be employed to determine the roundtrip-time $t_{RTT}$ between media server 31 and destination terminal 36.

Employing the feedback extensions proposed by Friedman et al., Receiver Timestamp Report Blocks allow to provide an accurate estimation of the roundtrip-time $t_{RTT}$ in the RTCP entity 38 of the destination terminal 36, when these blocks are used in conjunction with the so called Delay since Last Receiver Report (DLRR) Report Blocks. These blocks extend RTCP's timestamp reporting so that non-senders may also send timestamps. It recapitulates the NTP timestamp fields from the RTCP sender report. Note that the destination terminal 36 may not always need to estimate the roundtrip-time as the reporting interval might be given as an absolute value and not as a function of the $t_{RTT}$ from media server 31 to destination terminal 36.

As the average packets size s of the RTP data packets is known in the media server 31, the necessary parameters are available at the media server 31 to calculate the appropriate transmission data rate $X_{calc}$ in rate control section 34 using the throughput equation above. Hence, the whole processing to determine the transmission data rate $X_{calc}$ may be done at the media server 31 in the present embodiment of the invention.

Therefore the present embodiment allows to control the transmission data rate of the multimedia stream at the media server 31 in a transparent way for the destination terminal 36.

The destination terminal 36 has to decapsulate the received RTP packets from the media server 31 and to forward same to a buffer 39, which is used to reorder the RTP packets based on their sequence numbers $SN_i$, in case they have been received out of order, and to temporarily store the information of the RTP packets until the media data have been forwarded to a display application in a higher layer or a decompressor. Further, the RTP entity 37 at the destination terminal 36 detects lost RTP packets by a gap in the sequence numbers $SN_i$ of received RTP packets.

The RTCP entity 38 may be used to report on lost and acknowledged packets. The standard RTCP messages (receiver reports and sender reports) are used by the media server to calculate the $t_{RTT}$, as specified in RTP (see Schulzrinne et al., "RTP: A Transport Protocol for Real-Time Applications", IETF, RFC 1889, January 1996). The preferred method to report on received and lost packets uses the extended reports (in particular the Loss RLE Report Block) as defined by Friedman et al. However, it is noted that the present invention is not limited to this reporting method and that alternative methods to report on received and lost RTP packets may exist.

Destination terminal 36 and media server 31 must not observe the 5-second-minimum rule for RTCP packets as defined in the RTP/RTCP standard. RTCP packets can be sent at any time as long as they do not exceed the assigned RTCP bandwidth.

Further, the destination terminal 36 may be informed about the reporting interval, i.e. the interval in which the media server 31 is expecting the destination terminal 36 to provide feedback. The reporting interval can thereby be communicated during session setup as will be discussed further down below. The conveyed information may be expressed, for example, as a function of the $t_{RTT}$ between media server and destination terminal or as an absolute value.

To provide a server-based implementation of the rate control suggested by the TFRC definition, the media server 31 may further calculate the receiving rate $X_{recv}$, which indicates the data rate at which the RTP packets carrying the multimedia data stream are received by the destination terminal 36 and which is calculated by same in the TFRC specification. The computation of $X_{recv}$ can be accomplished at the media server 31 by accounting for the reported received RTP packets over an interval of time in which they were sent. Again, the stored timestamps $ts_i$ and the associated sequence numbers $SN_i$ recorded by the media server 31 may be used to determine an estimate of the receiver data rate $X_{recv}$ in a manner substantially similar to the TFRC specification.

As described in the previous sections, the media server 31 according to an embodiment of the present invention is capable of gathering all necessary information from the RTP/RTCP traffic flow between the media server 31 and the destination terminal 36 for the calculation of the appropriate transmission data rate at the rate control section 34 in accordance with the principles of the TFRC schemes. Having determined the appropriate transmission data rate of the multimedia data stream in rate control section 34, same instructs the RTP entity 32 to adapt the transmission data rate according to the calculated transmission data rate value. It is important to note that according to the present embodiment no "TFRC counterpart" (compare Fig. 2, TFRC entity 25) at the destination terminal 36 is needed to provide transmission data rate control.

The RTP entity 32 may report a change in the transmission data rate to the application layer, i.e. the application providing the multimedia data stream. The application providing the multimedia data stream may then reduce or enhance the transmission data rate by varying the bit-rate of audio and/or video stream/s to adopt to the new calculated transmission data rate value.

In a further embodiment the media server 31 may also comprise a buffer estimator 35. The buffer estimator 35 is used to estimate the fill-status of the destination terminal's playout buffer 39. It is important for the buffer estimator 35 of in media server 31 to know the state of the playout buffer 39 of destination terminal 36, so that the transmission data rate at the media server 31 may be increased to avoid buffer under-run or reduced to avoid buffer-overflow. Every time an RTP packet is transmitted by the RTP entity 32, the packet data is inserted into the buffer 39 in its full length. Under ideal conditions, each RTP packet would arrive at the destination terminal 36 after a time approximately equal to $t_{RTT}/2$.

Additionally, some time might be needed to counteract network jitter effects and reordering and decoding delays at the destination terminal 36. This additional time is referred to as $t_{jit\_dec}$ in the following. After a time $t_{del} = t_{RTT}/2 + t_{jit\_dec}$, the buffer estimator 35 may assume that the packet has been processed at the destination terminal 36 and has been deleted from buffer 39.

The interarrival jitter field in the RTCP sender report may provide a second short-term measure of network congestion. Packet loss measurements track persistent congestion while the jitter measurements track transient congestion. The jitter measurements may indicate congestion before it leads to packet loss. Since the interarrival jitter field in RTCP receiver reports is only a snapshot of the jitter at the time of a report, it may be necessary to analyze a number of reports from one receiver over time or from multiple receivers, e.g., within a single network.

It is to be noted that it may be assumed that no retransmissions for lost packets are issued and thus a large playout buffer 39 at the destination terminal 36 is not needed. In case retransmissions were used $t_{del}$ may have to be increased by $t_{rtx} =$ (number of retransmissions)$\cdot t_{RTT}$, i.e. the number of maximum desired retransmissions for each packet times the estimated round-trip time.

As explained above, RTP packets are processed approximately in time $t_{jit\_dec}$. The buffer 39 at the destination terminal 36 may be further used to counteract network jitter and decoder processing delay. In case retransmissions are used the size of this buffer 39 corresponds to $t_{recv\_buffer} = t_{jit\_dec} +$ (number of retransmissions)$\cdot t_{RTT}$, where the $t_{RTT}$ is the measured roundtrip-time by the destination terminal 36 and not by the media server 31 as stated above. This difference may be deemed to be small and could therefore be neglected.

According to a further embodiment of the present invention, before a multimedia data stream is transmitted, a streaming session is typically set-up using the Real Time Streaming Protocol (RTSP). This protocol defines a series of primitives that are used to announce, describe, set-up, start, stop and tear-down streaming sessions. Together with RTSP the Session Description Protocol (SDP) may be used. SDP defines a language for the description of the media being streamed.

In order for the algorithm to work properly, some information may be exchanged at session set-up. The destination terminal 36 may need to know how often feedback messages (both receiver reports and loss reports) may be transmitted to the media server 31 - the report interval may be communicated for initialization of the session. In an embodiment of the present invention it is assumed that standard RTCP packets (sender reports and receiver reports used for the $t_{RTT}$ computation) and Extended Reports packets (XR for loss reporting) are sent. Thus the report bandwidth may be shared equally between standard RTCP packets and Extended Report packets (as given by the communicated report interval).

In a further embodiment of the present invention it is also possible to specify a different bandwidth sharing rule, for example by making either the receiver reports (or sender reports) or the Extended Report packets for loss reporting less frequent. For example one receiver report could be sent after having transmitted three loss reports. A method for specifying bandwidth sharing could be implemented using an additional attribute in SDP, for example, in a similar way as described below. This embodiment allows to specify the ratio of the total number of standard RTCP packets and Extended Reports packets being sent to define the report interval mentioned above.

The report interval may be transmitted from the media server 31 to the destination terminal 36 using report interval information according to the SDP protocol. In the following an example for a session setup is shown. In the example, 'DT' stands for destination terminal 36 and 'MS' for media server 1.

```
DT->MS: DESCRIBE rtsp://foo/twister RTSP/1.0
   CSeq: 1

MS->DT: RTSP/1.0 200 OK
   CSeq: 1
   Content-Type: application/sdp
   Content-Length: 164

   v=0
   o=- 2890844256 2890842807 IN IP4 172.16.2.93
   s=RTSP Session
   i=An Example of RTSP Session Usage
   a=control:rtsp://foo/twister
   t=0 0
   m=audio 0 RTP/AVP 0
   a=control:rtsp://foo/twister/audio
-----> a=X-reporting-interval:0 3
-----> a=X-reporting-ratio:0 RR=1;XR=1
   m=video 0 RTP/AVP 26
   a=control:rtsp://foo/twister/video
-----> a=X-reporting-interval:26 3
-----> a=X-reporting-ratio:26 RR=1;XR=1


DT->MS: SETUP rtsp://foo/twister/audio RTSP/1.0
   CSeq: 2
   Transport: RTP/AVP;unicast;client_port=8000-8001

MS->DT: RTSP/1.0 200 OK



   CSeq: 2
   Transport: RTP/AVP;unicast;client_port=8000-8001;
       server_port=9000-9001
   Session: 12345678

DT->MS: SETUP rtsp://foo/twister/video RTSP/1.0
   CSeq: 3
   Transport: RTP/AVP;unicast;client_port=8002-8003
   Session: 12345678

MS->DT: RTSP/1.0 200 OK
   CSeq: 3
   Transport: RTP/AVP;unicast;client_port=8002-8003;
       server_port=9004-9005
   Session: 12345678

DT->MS: PLAY rtsp://foo/twister RTSP/1.0
   CSeq: 4
   Range: npt=0-
   Session: 12345678

MS->DT: ....
```

As it can be observed, the marked lines indicate the needed report interval information for initializing the report interval. The line

```
m=audio 0 RTP/AVP 0
```

maps the number zero (0) to the payload type (encoding) used for audio and the line

```
m=video 0 RTP/AVP 26
```

maps the number twenty-six (26) to the video payload type. The number three (3) in the following lines:

```
a=X-reporting-interval:0 3
```

and

```
a=X-reporting-interval:26 3
```

indicates that the reporting interval for both audio and video may be three times the roundtrip-time value.

The line containing the x-reporting-ratio attribute indicates the ratio of receiver reports and extended reports as report ratio information. In this case both equally share the RTCP bandwidth.

```
a=X-reporting-ratio:0 RR=1;XR=1
```

However, in the following example:

```
a=X-reporting-ratio:0 RR=1;XR=2
```

the extended reports (XR) would be sent twice as often as the receiver reports (RR).

It is noted that different approaches to communicate the reporting interval exist. One approach may further be to use RTCP bandwidth modifiers.

The RTP specification allows a profile to specify that the RTCP bandwidth may be divided into two separate session parameters for those participants which are active data senders and those which are not. Using two parameters allows RTCP reception reports to be turned off entirely for a particular session by setting the RTCP bandwidth for non-data-senders to zero while keeping the RTCP bandwidth for data senders non-zero so that sender reports can still be sent for inter- media synchronization. This may be appropriate for systems operating on unidirectional links or for sessions that don't require feedback on the quality of reception.

The Session Description Protocol (SDP) includes an optional bandwidth attribute having the following syntax:

```
b=<modifier>:<bandwidth-value>
```

where <modifier> is a single alphanumeric word giving the meaning of the bandwidth figure, and where the default units for <bandwidth-value> are kilobits per second. This attribute specifies the proposed bandwidth to be used by the session or media.

A typical use is with the modifier "AS" (for Application Specific Maximum) which may be used to specify the total bandwidth for a single media stream from the media server 31. Two additional bandwidth modifiers may be used to control the report interval of the destination terminal 36:

$$b=RS:<bandwidth-value>$$

$$b=RR:<bandwidth-value>$$

where "RS" indicates the RTCP bandwidth allocated to active data senders (as defined by the RTP specification) and "RR" indicates the RTCP bandwidth allocated to other participants in the RTP session (i.e., destination terminals). The bandwidth allocation applies to the total bandwidth consumed by all RTCP packet types, including sender report, receiver report, SDES, BYE, APP and extended reports (XR) and any new types defined in the future. The <bandwidth-value> for these modifiers is in units of bits per second with an integer value.

These bandwidth modifiers, representing the report interval information in a further embodiment of the present invention, may be used for limiting the RTCP bandwidth allocated for the RTCP traffic of the destination terminal 36. This would imply that receiver reports and other messages can only be sent at the frequency given by this new value. The built-in algorithm in RTP may use this given RTCP bandwidth and may automatically calculate the reporting interval. Therefore the implementer may assign the RTCP bandwidth values correspondingly to converge to the desired reporting interval.

**Claims**

1. A method for controlling the transmission data rate of a multimedia data stream in a session-based streaming environment comprising a media server and a destination terminal, wherein a session control protocol is employed to control the multimedia data stream, the method being performed at the media server and comprising the steps of:

   transmitting the multimedia data stream from the media server to the destination terminal according to a multimedia streaming protocol,

   receiving session control data from the destination terminal,

   calculating a data rate value of the multimedia data stream based on the session control data, and

   controlling the data rate of the multimedia data stream based on the calculated data rate value.

2. The method according to claim 1, wherein the session control data comprises time stamps or packet loss report blocks for reporting losses of data packets which are employed to transmit the multimedia data stream or time stamps and packet loss report blocks.

3. The method according to claim 2, wherein in the step of calculating, the media server calculates a loss event rate and a round-trip time between the media server and the destination terminal based on the received time stamps and the packet loss report blocks.

4. The method according to claim 3, wherein in the step of calculating, the media server calculates the data rate value based on the loss event rate and the round-trip time.

5. The method according to claim 4, wherein the media server calculates the data rate value based on a size of the data packets used to transmit the multimedia data stream.

6. The method according to one of claims 1 to 5, further comprising the step of initialising a session for the transmission of the multimedia data stream.

7. The method according to claim 6, wherein the step of initialising comprises transmitting a report interval information to the destination terminal, wherein the time interval between transmissions of session control data from the destination terminal to the media server is determined based on the report interval information.

8. The method according to claim 7, wherein the session control data is comprised in receiver reports sent from the destination terminal to the media server according to the RTP/RTCP specifications and extended reports sent from the destination terminal to the media server for reporting a packet loss rate.

9. The method according to claim 7 or 8, wherein the report interval information comprises report ratio information determining the ratio of the number of said receiver reports and the number of said extended reports.

10. The method according to one of claims 1 to 9, wherein the multimedia data stream and the session control data are transmitted in data packets, wherein the data packets comprise a sequence number and further comprising the step of storing a transmission time and the sequence number of the data packets transmitted to the destination terminal in a memory.

11. The method according to one of claims 1 to 10, further comprising the steps of:

estimating the fill-status of a buffer at the destination terminal, wherein the buffer is used for buffering the received multimedia data stream,

increasing the data rate of the multimedia data stream, in case the estimated fill-status indicates a possible buffer under-run, and

decreasing the data rate of the multimedia data stream, in case the estimated fill-status indicates a possible buffer-overflow.

12. The method according to claim 11, wherein the multimedia streaming protocol is the Real-time Transport Protocol (RTP) and the session control protocol is the RTP Control Protocol (RTCP).

13. The method according to claim 12, wherein the session control data used for calculating the data rate value is comprised in at least one of receiver reports, loss report blocks, receiver timestamp report blocks, and delay since last receiver report blocks.

14. A media server for controlling the transmission data rate of a multimedia data stream in a session-based streaming environment comprising the media server and a destination terminal, wherein a session control protocol is employed to control the multimedia data stream, the media server comprising:

transmission means for transmitting the multimedia data stream from the media server to the destination terminal using a multimedia streaming protocol,

receiving means for receiving session control data from the destination terminal,

calculation means for calculating a data rate value of the multimedia data stream based on the session control data and

control means for controlling the data rate of the multimedia data stream based on the calculated data rate value.

15. The media server according to claim 14, adapted to perform the method according steps according to one of claims 1 to 13.

16. A destination terminal adapted to perform communications with a media server according to claim 14 or 15.

17. The destination terminal according to claim 16, further comprising
receiving means for receiving a report interval information from the media server, wherein the time interval between transmissions of session control data and/or the ratio of transmissions of session control data is determined based on the report interval information and
transmission means for transmitting session control data to the media server based on the report interval value.

18. The destination terminal according to claim 16 or 17, further comprising a buffer for buffering the received multimedia data stream.

**19.** A media streaming system comprising at least one media server according to claim 14 or 15 and at least one destination terminal according to one of claims 16 to 18.

**Fig. 1**

**Fig. 2**

Media Data                    Media Data

34          32           37

Media Server          Destination Terminal

| Rate Control Section | → | RTP entity | → | RTP entity | | Buffer |

| RTCP entity | ← → | RTCP entity |

33                           39

| Buffer Estimator |          38

35

31          36

**Fig. 3**

EP 1 450 514 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SISALEM D ET AL: "The Loss-Delay Adjustment Algorithm: A TCP-friendly Adaptation Scheme" COLUMBIA UNIVERSITY ON-LINE PAPERS, 8 July 1998 (1998-07-08), XP002226884 Retrieved from the Internet: <URL:http://www.cs.columbia.edu/~hgs/papers/Sisa9807_Loss.pdf> [retrieved on 2003-01-10] * abstract * * sections 1., 3., 3.1 - 3.3, 4.2, 4.3 * | 1-8,10, 12-19 | H04L12/56 H04L29/06 H04L1/00 |
| X | REHA CIVANLAR M: "Protocols for real-time multimedia data transmission over the Internet" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 3809-3812, XP010279676 ISBN: 0-7803-4428-6 * abstract * * sections 4., 5. * | 1-3,6-8, 10,12-19 | |
| X | EP 1 235 392 A (MATSUSHITA ELECTRIC IND CO LTD) 28 August 2002 (2002-08-28) * abstract * * paragraph [0001] - paragraph [0033] * * paragraph [0037] - paragraph [0041] * * paragraph [0052] * * paragraph [0057] - paragraph [0069] * | 1,2,5, 11,12, 14-16, 18,19 | TECHNICAL FIELDS SEARCHED (Int.Cl.7) H04L |

-/--

The present search report has been drawn up for all claims

| Place of search | Date of completion of the search | Examiner |
|---|---|---|
| THE HAGUE | 4 August 2003 | Kesting, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

15

EP 1 450 514 A1

**European Patent Office**

# EUROPEAN SEARCH REPORT

Application Number

EP 03 00 3162

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FRIEDMAN T; CACERES R; CLARK A: "RTP Extended Reports (RTP XR)" INTERNET DRAFT, [Online] 24 January 2003 (2003-01-24), pages 1-41, XP002249991 Retrieved from the Internet: <URL:http://www.watersprings.org/pub/id/draft-ietf-avt-rtcp-report-extns-02.txt> [retrieved on 2003-07-31] * abstract * * section 1 * | 8 | |
| A | SCHULZRINNE ET AL: "RTP: A Transport Protocol for Real-Time Applications" INTERNET DRAFT, 20 November 2001 (2001-11-20), XP002206348 Retrieved from the Internet: <URL:http://www.ietf.org/internet-drafts/draft-ietf-avt-rtp-new-11.ps> [retrieved on 2002-07-12] * sections 6.3, 6.4 * | 6,7,12, 13,17 | |
| A | MIYAZAKI A ET AL: "RTP Payload formats to Enable Multiple Selective Retransmissions" INTERNET DRAFT, [Online] June 2002 (2002-06), pages 1-29, XP002250059 Retrieved from the Internet: <URL:http://www.watersprings.org/pub/id/draft-ietf-avt-rtp-selret-05.txt> [retrieved on 2003-08-04] * abstract * * page 7, line 29 - line 37 * * page 8, line 34 - line 40 * * page 10, line 1 - line 10 * | 1,14,16, 19 | |

TECHNICAL FIELDS SEARCHED (Int.Cl.7)

The present search report has been drawn up for all claims

| Place of search | Date of completion of the search | Examiner |
|---|---|---|
| THE HAGUE | 4 August 2003 | Kesting, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.** EP 03 00 3162

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2003

| Patent document cited in search report | Publication date | Patent family member(s) | | Publication date |
|---|---|---|---|---|
| EP 1235392 A | 28-08-2002 | AU | 7777301 A | 02-04-2002 |
| | | EP | 1235392 A1 | 28-08-2002 |
| | | WO | 0225878 A1 | 28-03-2002 |
| | | US | 2002194361 A1 | 19-12-2002 |

EPO FORM P0459

For more details about this annex : see Official Journal of the European Patent Office, No. 12/82